# EUROPEAN PATENT APPLICATION

(11) **EP 4 442 349 A1**
(43) Date of publication of application: **09.10.2024**
(21) Application number: 23166599.3
(22) Date of filing: 04.04.2023
(51) Int. Cl.: B01D 53/08, B01D 53/12

(54) **PLANT AND METHOD FOR CAPTURING CARBON DIOXIDE FROM A CARBON DIOXIDE LADEN GAS STREAM**

(71) Applicant: Dharma Karma Foundation, Atherton, CA 94027 (US)
(72) Inventor: FUCHS, Josef, 1140 Wien (AT); FUCHS, Johannes, 3900 Schwarzenau (AT); CHIMANI, Florian, 4540 Pfarrkirchen (AT); BHANDARI, Aditya Anil, Burlingame, 94010 (US); WALLMÜLLER, Andreas, 3340 Waidhofen an der Ybbs (AT); FAHRNGRUBER, Michael, 3341 Ybbsitz (AT); FLEIß, Benjamin, 1060 Wien (AT); HOFBAUER, Hermann, 1060 Wien (AT); MÜLLER, Stefan, 1130 Wien (AT)
(74) Representative: SONN Patentanwälte GmbH & Co KG

(57) **Abstract**

A plant (1) for capturing carbon dioxide (CO2) from a carbon dioxide laden gas stream (2), comprising:
an adsorption device (3) with a container (4) for containing an adsorbent (5) made of solid adsorbent particles (5a) for binding the carbon dioxide (CO2) to the adsorbent (5), the adsorption device (3) having an adsorbent inlet (6) and an adsorbent outlet (7),
a regeneration device (8) for separating the bound carbon dioxide (CO2) from the adsorbent (5), the regeneration device (8) having an adsorbent intake (9) and an adsorbent outtake (10),
wherein the adsorbent outlet (7) is connected to the adsorbent intake (9) and the adsorbent outtake (10) is connected to the adsorbent inlet (6),
wherein
a fixed bed regenerator (11) of the regeneration device (8) having a reservoir (12) for the adsorbent (5) and a fluid outlet (14) for withdrawing at least carbon dioxide (CO2) from the reservoir (12),
an intake valve (15) being arranged in the adsorbent intake (9),
an outtake valve (16) being arranged in the adsorbent outtake (10),
wherein the intake and the outtake valve (15, 16) are configured to be selectively transferred between an open state allowing passage of the adsorbent (5) through the adsorbent intake (9) into the reservoir (12) and through the adsorbent outtake (10) out of the reservoir (12), respectively, and a closed state blocking passage of the adsorbent (5) through the adsorbent intake (9) into the reservoir (12) and through the adsorbent outtake (10) out of the reservoir (12) in an essentially airtight manner, respectively,
a vacuum generation unit (17) for generating a vacuum inside the reservoir (12) in the closed state of the intake and outtake valve (15, 16), respectively.

## Description

The invention relates to a plant for capturing carbon dioxide from a carbon dioxide laden gas stream, comprising:
an adsorption device with a container for containing an adsorbent made of solid adsorbent particles for binding the carbon dioxide to the adsorbent, the adsorption device having an adsorbent inlet and an adsorbent outlet,
a regeneration device for separating the bound carbon dioxide from the adsorbent, the regeneration device having an adsorbent intake and an adsorbent outtake,
wherein the adsorbent outlet of the adsorption device is connected to the adsorbent intake of the regeneration device and the adsorbent outtake of the regeneration device is connected to the adsorbent inlet of the adsorption device.

The invention also relates to a method for capturing carbon dioxide from a carbon dioxide laden gas stream, comprising at least the following steps:
a) introducing the carbon dioxide laden gas stream into a container of an adsorption device containing an adsorbent made of solid adsorbent particles for binding the carbon dioxide to the adsorbent;
b) transporting the adsorbent through the container, thereby adsorbing carbon dioxide from the gas stream on the adsorbent contained in the adsorption device, and further into a regeneration device.

A system and a method for removing carbon dioxide from an atmosphere is known from EP 3 653 282 A1. As shown in figs. 11a and 11b of EP 3 653 282 A1, particles, preferably of pellet size, flow by gravity into a storage bin. The pellets are coated with a sorbent able to absorb or bind carbon dioxide. The pellets can be selectively fed through a valve structure into an air contacting vessel, and a flow of carbon dioxide laden air is directed through the vessel, so that the sorbent absorbs or binds the carbon dioxide and removes the carbon dioxide from the air. A regeneration bin is provided below the air contacting vessel. The pellets can be selectively directed into the regeneration bin, where process heat is directed at the pellets, to remove carbon dioxide from the sorbent and regenerate the sorbent. The pellets with the regenerated sorbent are then directed to a vertical lifting structure, from where they are redirected into the storage bin again.

It is however disadvantageous that the known plant is rather large in size, complex and requires high energy input.

It is therefore an object of the invention to provide a plant and a method as indicated above, which avoid or at least mitigate the disadvantages of the prior art. In particular the plant and the method shall allow for comparatively small construction size, low energy demand and high efficiency in capturing carbon dioxide.

This object is solved by a plant according to claim 1 and a method according to claim 16. Advantageous embodiments and further developments are specified in the dependent claims.

The plant according to the invention is characterized by
a fixed bed regenerator of the regeneration device having a reservoir for the adsorbent and a fluid outlet for withdrawing at least carbon dioxide from the reservoir,
an intake valve being arranged in the adsorbent intake of the regeneration device,
an outtake valve being arranged in the adsorbent outtake of the regeneration device,
wherein the intake and the outtake valve are configured to be selectively transferred between an open state allowing passage of the adsorbent through the adsorbent intake into the reservoir of the fixed bed regenerator and through the adsorbent outtake out of the reservoir, respectively, and a closed state blocking passage of the adsorbent through the adsorbent intake into the reservoir and through the adsorbent outtake out of the reservoir in an essentially airtight manner, respectively,
a vacuum generation unit configured to generate a vacuum inside the reservoir in the closed state of the intake and outtake valve, respectively.

The plant is provided to capture carbon dioxide from a carbon dioxide laden gas stream. The gas stream may be ambient air, an output from an industrial process, an output of a carbon dioxide emitting device or any combination thereof. In particular the plant can be used to capture the carbon dioxide emitted from heating, ventilation or air conditioning devices. The plant comprises an adsorption device with a container. The container is provided for containing an adsorbent made of solid adsorbent particles which are adapted for binding the carbon dioxide to the adsorbent. Furthermore the plant comprises a regeneration device for separating the carbon dioxide bound to the adsorbent from the adsorbent by subjecting the adsorbent to heat. The adsorption device comprises an adsorbent inlet and an adsorbent outlet and the regeneration device comprises an adsorbent intake and an adsorbent outtake. In order to allow for circulation of the adsorbent between the adsorption device and the regeneration device, the adsorbent outlet of the adsorption device is connected to the adsorbent intake of the regeneration device and the adsorbent outtake of the regeneration device is connected to the adsorbent inlet of the adsorption device. In order to allow for the separation of the bound carbon dioxide from the adsorbent in an efficient manner the regeneration device comprises a fixed bed regenerator. As is known to the person skilled in the art, a fixed bed regenerator is a special type of regenerator in which one or more fluids flow through a solid bed or packing. The fixed bed regenerator and therefore the regeneration device comprises a reservoir for the adsorbent to be regenerated, i.e. to be separated from carbon dioxide, and a fluid outlet for withdrawing at least the separated carbon dioxide from the reservoir. It shall be noted that the adsorbent inlet and the adsorbent outlet of the adsorption device is also an adsorbent inlet and adsorbent outlet of the container and the adsorbent intake and the adsorbent outtake of the regeneration device is also an adsorbent intake and an adsorbent outtake of the reservoir. In addition the plant comprises an intake valve being arranged in the adsorbent intake of the regeneration device and an outtake valve being arranged in the adsorbent outtake of the regeneration device. The intake valve and the outtake valve are configured to be selectively transferred from an open state into a closed state and vice versa. In the open state the intake valve allows for passage of the adsorbent through the adsorbent intake into the reservoir of the fixed bed regenerator and the outtake valve allows for passage of the adsorbent through the adsorbent outtake out of the reservoir, respectively. In the closed state the intake valve shuts off a passage of the adsorbent through the adsorbent intake into the reservoir in an essentially airtight manner and the outtake valve shuts off a passage of the adsorbent through the adsorbent outtake out of the reservoir in an essentially airtight manner, respectively. Furthermore, the plant comprises a vacuum generation unit configured to generate a vacuum inside the reservoir in the closed state of the intake and outtake valve, respectively. The vacuum inside the reservoir may range from 0,1 bar to 0,8 bar, in particular from 0,15 bar to 0,5 bar. For this reason the vacuum generation unit is connected to or part of the regeneration device, e.g. connected to the fluid outlet of the regeneration device. Because of the fixed bed regenerator, the intake and outtake valve and the vacuum generation unit the plant allows for capturing carbon dioxide from a carbon dioxide laden gas stream in a very efficient manner. Compared to a bubbling fluidized bed regenerator the fixed bed regenerator does not require a high fluid stream for fluidization of the adsorbent. Furthermore, as the intake and outtake valve are constructed to close in an essentially airtight manner the vacuum (pressure below atmospheric pressure) can be generated and kept in the reservoir efficiently. A strong vacuum allows for lower temperatures in the reservoir to achieve the same degree of regeneration as with higher pressure (weaker vacuum) and higher temperatures in the reservoir. As the intake and outtake valve close in an essentially airtight manner low-temperature waste heat (e.g. below 120°C) can be used to warm the reservoir and thereby regenerate the adsorbent for example. Furthermore evacuating the reservoir from ambient air or any portions of the gas stream prior to separating the bound carbon dioxide from the adsorbent allows for achieving cleaner carbon dioxide at the fluid outlet of the fixed bed regenerator. It shall be noted that the term "essentially airtight manner" shall be understood in that the intake and outtake valve shall close to be airtight, or in general fluid-tight, when subjected to the vacuum established in the reservoir of the plant. As the fluid in the plant can comprise also other components than air, airtight shall be understood more generally as leak-proof in terms of the fluid to be retained by the valves. However, the intake and outtake valve, or in general the essentially airtight valves, may comprise leakages that are negligible in terms of the function of the plant.

When reference is made in this description to location and directional indications such as upper, lower, above or below, these indications are to be understood in relation to a position of use of the plant. In particular, the term "below" refers to a view in the direction of gravity.

According to a preferred embodiment of the invention the intake valve is a intake ball valve and/or the outtake valve is a outtake ball valve. I.e. the intake valve and/or the outtake valve can be a ball valve/ball valves. Ball valves are particularly suitable for closing the adsorbent intake and the adsorbent outtake in an essentially airtight manner. Furthermore, ball valves can be closed even if the adsorbent intake or the adsorbent outtake is filled with adsorbent. This allows for filling the reservoir completely (batch-wise) with adsorbent, which can be achieved in that even the adsorbent intake is filled with adsorbent and the intake ball valve is closed, moving through the mass of solid adsorbent particles. Filling the reservoir completely with adsorbent prior to regenerating the adsorbent in the reservoir reduces the formation of empty spaces in the reservoir (the spaces among the adsorbent particles) to a minimum, which in turn is useful for carbon dioxide purity. In contrast to the ball valves rotary valves used in the prior art are expensive and provide only limited sealing. The seals of rotary valves are not considered sufficiently tight to regenerate with vacuum, and there is also a continuous leakage flow of air or fluid in general through the intermediate grain volume of the adsorbent with each rotation of rotary valves.

The person skilled in the art knows that a ball valve may have a hollow ball comprising at least two openings for fluid passage and adopted to pivot in order to control fluid or fluidized particles or particles flowing through it.

According to another preferred embodiment, the fixed bed regenerator comprises a steam inlet for feeding steam or purging gas into the reservoir. The steam or purging gas can support the separation of carbon dioxide from the adsorbent. The steam may be hot steam or the purging gas may be hot purging gas. The temperature of the steam or purging gas may be in the range from 50°C to 140°C, preferably from 60°C to 90°C. The absolute pressure of the steam or purging gas may be in the range from 0,1 bar to 0,8 bar. Low-temperature waste heat can also be used to provide the necessary heat for vacuum (pressure below atmospheric pressure) steam or purging gas generation. The fixed bed regenerator may also comprise a steam outlet or purging gas outlet for withdrawing the steam or purging gas from the reservoir after separation of carbon dioxide from the adsorbent. The steam outlet or purging gas outlet may be the fluid outlet of the fixed bed regenerator. When using steam the fixed bed regenerator may be operated with less steam for regenerating the adsorbent when compared to a bubbling fluidized bed regenerator.

In order to allow the adsorbent to be regenerated, i.e. separated from the bound carbon dioxide, under temperatures higher than ambient temperatures it is preferred to connect the regeneration device to a heating unit. For instance the heating unit may be a heat exchanger and/or a heat jacket (e.g. containing hot water) in and/or on the reservoir to heat the interior of the reservoir.

Advantageously a cooling vessel for cooling the adsorbent is arranged between the adsorbent outtake of the regeneration device and the adsorbent inlet of the adsorption device, the cooling vessel being connected to a cooler and/or a vacuum generator. The vacuum generator may be the vacuum generation unit mentioned above. By means of the cooling vessel the heated adsorbent exiting the adsorbent outtake of the regeneration device can be cooled and in a cooled state returned to the adsorption device. Preferably the volume of the cooling vessel is sufficiently large to accommodate all of the adsorbent held in the regeneration device during separation of the carbon dioxide. For cooling the cooling vessel and thereby the interior thereof the cooling vessel may be connected to a cooler and/or a vacuum generator. The cooler may be a heat exchanger in and/or on a housing of the cooling vessel. The vacuum generator may be connected to or be part of the cooling vessel. In case of the vacuum generator an additional cooler may be dispensed with.

Preferably the adsorption device comprises a fluidized bed adsorber with a gas stream inlet for receiving the gas stream. By means of the fluidized bed adsorber the carbon dioxide present in the gas stream can be bound particularly efficiently by the adsorbent swirling around in the container of the adsorption device. The gas stream to be separated from carbon dioxide can be introduced into the container by the gas stream inlet.

It is furthermore preferred when the adsorption device comprises or is connected to a flow device configured to generate a flow of the gas stream and adsorbent through the fluidized bed adsorber. The flow device may define the velocity of the adsorbent moving from the adsorbent inlet through the container of the fluidized bed adsorber towards the adsorbent outlet and therefore the time the adsorbent is in contact with the carbon dioxide laden gas stream in the fluidized bed adsorber. The flow device also provides for replacement of an essentially carbon dioxide free gas volume in the container, which is the result of adsorption, with a carbon dioxide laden gas volume in a timely manner. In this way the flow device contributes to efficient adsorption of carbon dioxide.

Advantageously an inlet valve, in particular a so-called L-valve enabling pneumatic transport of the adsorbent, configured for stepless adjusting of a flow rate of adsorbent is arranged in the adsorbent inlet of the adsorption device. The inlet valve may be connected to a sensor configured to detect a density or filling of adsorbent in the container of the adsorption device and/or a carbon dioxide concentration at the adsorbent outlet. Depending on the output of the sensor the inlet valve may increase or decrease the rate of flow of adsorbent through the adsorbent inlet in order to achieve a desired density of adsorbent in the container. It is advantageous that the L-valve allows the adsorbent flow rate to be changed by setting the supplied air flow through the valve.

It is preferred that the adsorbent is contained in the container, the solid adsorbent particles being smaller than 1,5 mm in size. The size of an adsorbent particle shall be understood as the maximum extension of the adsorbent particle measured in any direction. It shall be noted that a small amount of adsorbent particles, preferably less than 10 %, more preferably less than 5 %, in particular less than 1 % of the adsorbent particles contained in the container may be of larger size than 1,5 mm. However it is also possible that all solid adsorbent particles contained in the container are smaller than 1,5 mm in size. Adsorbent particles of this small size are particularly suitable for binding carbon dioxide to the adsorbent as they allow for a large number of adsorbent particles in the container and therefore for a large overall surface area of adsorbent. It is preferred to use a polymer-based adsorbent (e.g. Lewatit^{®} VP OC 1065) .

In a preferred embodiment a separator device for separating the adsorbent from the gas stream is arranged between the adsorbent outlet of the adsorption device and the adsorbent intake of the regeneration device. The separator device preferably comprises a gas discharge device for discharging gas essentially free of carbon dioxide e.g. into ambient air. Preferably the separator device comprises a receptacle to accommodate the solid adsorbent particles received from the adsorption device and to be transported into the reservoir of the fixed bed regenerator. The separator device may be a cyclone or a gravity separator.

In another preferred embodiment an exit valve, preferably an exit ball valve, being arranged in an adsorbent exit of the cooling vessel and configured to be selectively transferred between an open state allowing passage of the adsorbent through the adsorbent exit out of the cooling vessel and a closed state blocking passage of the adsorbent through the adsorbent exit. Preferably the exit valve is a ball valve closing the adsorbent exit of the cooling vessel in an essentially airtight manner.

Furthermore a buffer vessel for holding adsorbent may be arranged between the adsorbent exit of the cooling vessel and the adsorbent inlet of the adsorption device. Preferably the volume of the buffer vessel is sufficiently large to accommodate all of the adsorbent held in the cooling vessel during cooling of the adsorbent. By opening the exit valve the cooled adsorbent can be transferred into the buffer vessel. Furthermore adsorbent from the buffer vessel can be transferred into the container of the adsorption device essentially in order to compensate for the outflow of adsorbent through the adsorbent outlet.

According to another embodiment it may be provided that a control unit being connected to the intake valve and to the outtake valve and configured to transfer the intake valve into the open state and to transfer the outtake valve into the closed state until the reservoir is completely filled with adsorbent before separating the bound carbon dioxide from the adsorbent and configured for transferring the intake valve into the closed state and the outtake valve into the open state until the adsorbent is completely removed from the reservoir after separating the bound carbon dioxide from the adsorbent. As a result the reservoir can be filled and emptied batch-wise. It shall be noted that transferring the intake valve and/or outtake valve into the open state or closed state does include keeping the intake valve and/or outtake valve in the open state or closed state when they have been transferred into the desired open or closed state before. The control unit may comprise a microcontroller or a microprocessor. Preferably the control unit is also connected to a level sensor detecting a level of adsorbent in the reservoir or in the adsorbent intake of the fixed bed regenerator in order to open and close the intake and outtake valve in due time. Furthermore, the control unit may be connected to a timer or to a carbon dioxide sensor detecting the amount of separated carbon dioxide in the reservoir of the fixed bed regenerator. After the timer has expired or upon detection of a target value of separated carbon dioxide in the reservoir, the outtake valve may be opened.

Preferably the control unit is connected to the inlet valve and configured to control the flow rate of adsorbent through the inlet valve until a predefined amount of adsorbent is present in the adsorption device. The control unit may be connected to a sensor configured to detect a density or amount of adsorbent in the container and/or to measure a carbon dioxide concentration in the container, in particular at the adsorbent outlet. Depending on the output of the sensor the control unit may control the inlet valve to increase or decrease the flow rate of adsorbent, or open or close the flow path in the adsorbent inlet of the adsorption device to achieve a desired density or amount of adsorbent in the container. The flow of adsorbent into the adsorbent inlet of the adsorption device can take place batch-wise but more preferably continuously.

It is furthermore preferred if the control unit is connected to the flow device and configured to maintain the flow of gas stream and adsorbent through the container of the adsorption device for a time period during which at least twice the regeneration device is completely filled with adsorbent, the carbon dioxide is separated from the adsorbent and the adsorbent is completely removed from the regeneration device. In this way the transport of gas stream and adsorbent through the container of the adsorption device and therefore the adsorption of carbon dioxide takes place continuously while the fixed bed regenerator is filled and emptied batch-wise (e.g. completely), i.e. the separation of the bound carbon dioxide from the adsorbent takes place batch-wise. As a result both the adsorption of carbon dioxide and the separation of the bound carbon dioxide from the adsorbent can be performed efficiently.

The method according to the invention is characterized by
c) feeding a batch of the adsorbent into a reservoir of a fixed bed regenerator of the regeneration device;
d) closing the reservoir of the fixed bed regenerator containing the adsorbent in an essentially airtight manner;
e) generating a vacuum inside the reservoir of the fixed bed regenerator and providing heat into the reservoir thereby separating the carbon dioxide bound to the adsorbent from the adsorbent;
f) removing the carbon dioxide separated from the adsorbent and the adsorbent from the fixed bed regenerator; and
g) recirculating the adsorbent into the adsorption device.

The method is used to capture carbon dioxide from a carbon dioxide laden gas stream. With regard to the description of the method, reference is also made to the preceding description of the plant, insofar as this description is applicable in terms of meaning to the method. Likewise, in connection with the description of the plant, reference is made to the following description of the method. The method may comprise at least the following steps.
a) The carbon dioxide laden gas stream is introduced into a container of an adsorption device. The container contains an adsorbent made of solid adsorbent particles for binding the carbon dioxide to the adsorbent.
b) The adsorbent contained in the container of the adsorption device is transported through the container. By this carbon dioxide from the carbon dioxide laden gas stream contained in the container is adsorbed on the adsorbent. Furthermore the adsorbent having adsorbed carbon dioxide is transported from the container into a regeneration device. The regeneration device is provided for separating the bound carbon dioxide from the adsorbent.
c) Transporting the adsorbent into the regeneration device is performed by feeding a batch of the adsorbent into a reservoir of a fixed bed regenerator of the regeneration device. Feeding a batch of the adsorbent shall be understood in distinction to feeding adsorbent continuously, e.g. all the adsorbent to be processed in the regeneration device is fed at once. In other words when feeding a batch of adsorbent a defined amount of adsorbent is transported into the reservoir during a certain short time period and no adsorbent is transported into the reservoir during a following certain longer time period.
d) After feeding the batch of the adsorbent into the reservoir the reservoir of the fixed bed regenerator containing the adsorbent is being closed in an essentially airtight manner. In particular an adsorbent intake and an adsorbent outtake of the regeneration device and therefore of the reservoir are being closed.
e) After closing the reservoir a vacuum is generated inside the closed reservoir of the fixed bed regenerator and heat is provided into the closed reservoir. By this the carbon dioxide bound to the adsorbent is separated from the adsorbent.
f) Upon separation of carbon dioxide the carbon dioxide separated from the adsorbent and the adsorbent (i.e. the solid adsorbent particles) are removed from the fixed bed regenerator, i.e. from the reservoir. The separated carbon dioxide can be removed via a fluid outlet of the fixed bed regenerator (i.e. of the reservoir) when the reservoir is still closed. For removing the adsorbent the reservoir, in particular the adsorbent outtake of the reservoir, is opened.
g) The adsorbent free of carbon dioxide and removed from the fixed bed regenerator is recirculated into the adsorption device.

According to a preferred embodiment of the method steam or purging gas can be provided into the reservoir during step e). The steam may be hot steam or the purging gas may be hot purging gas. The steam or purging gas may assist in separating carbon dioxide from the adsorbent.

When heating the reservoir during step e) with a heating unit, in accordance with a preferred embodiment of the method, the adsorbent contained in the reservoir can be heated fast, efficiently and precisely, thereby achieving a desired temperature within the reservoir optimized for the separation of carbon dioxide. For instance hot fluid may be guided through a heat exchanger in and/or on the reservoir and/or a heat jacket in and/or on the reservoir may be heated.

Furthermore transporting the adsorbent from the regeneration device into a cooling vessel before step g) and cooling the cooling vessel with a cooling unit and/or a vacuum generator is preferred. The vacuum generator may be the vacuum generation unit mentioned above. By cooling the cooling vessel the adsorbent contained in the cooling vessel is cooled as well and thereby prepared to be reused in the adsorption device. The cooling vessel may be cooled by a cooling unit e.g. a heat exchanger containing cooled fluid in and/or on a housing of the cooling vessel. In addition or alternatively the cooling vessel may be cooled by a vacuum generator generating a vacuum, preferably with an absolute pressure below 0,2 bar, in the cooling vessel. By applying a vacuum in the cooling vessel any water which could have been added to the adsorbent, e.g. by steam in the regeneration device and/or via co-adsorption of water during the adsorption step of a carbon dioxide laden and humid gas stream, can be evaporated, thereby cooling the adsorbent.

As the cooled cooling vessel is different from the regeneration device, in particular from the reservoir, requiring heat for the separation process, there is no need to alternately heat and cool the regeneration device. Therefore the temperature inside the reservoir can be maintained at the desired level with low energy input and needs to be adopted slightly essentially after filling the reservoir with new adsorbent and removing adsorbent from the reservoir. In particular, the walls of the reservoir may always be kept warm (or at least for a plurality of batches of adsorbent in the reservoir).

It is furthermore preferred to provide the adsorption device comprising a fluidized bed adsorber in step a) and to transport the adsorbent through the container in step b) by generating a flow of gas stream and adsorbent through the adsorption device by means of a flow device. Performing a fluidized bed adsorption allows for efficient adsorption of carbon dioxide. Furthermore the flow of gas stream and adsorbent generated by the flow device allows for keeping the gas and the adsorbent in the container as accurately as possible for that period of time which is required to adsorb possibly all the carbon dioxide in the container by the adsorbent.

Separating the adsorbent from the gas stream by means of a separator device arranged between the adsorption device and the regeneration device before transporting the adsorbent into the regeneration device in step b) is advantageous as well. By this gas essentially free of carbon dioxide may be released by the separator device into the ambient air while the solid adsorbent particles are collected in the separator device and are thereby ready for being transported into the regeneration device.

It is furthermore preferred to transport the adsorbent from the cooling vessel into a buffer vessel and to hold at least a part of the adsorbent in the buffer vessel before step g). By this a desired (large or small) amount of adsorbent can be transported from the buffer vessel into the container of the adsorption device as needed, e.g. continuously or step by step.

By comparing the amount of adsorbent contained in the adsorption device with a target value of adsorbent and transporting adsorbent from the buffer vessel into the adsorption device to meet the target value, it can be ensured to always have an amount of adsorbent in the container suitable for efficient adsorption of carbon dioxide.

Particularly preferred is completely filling the reservoir of the regeneration device with the batch of adsorbent before separating the carbon dioxide from the adsorbent and completely removing the batch of the adsorbent from the reservoir of the regeneration device after separating the carbon dioxide from the adsorbent, and preferably completely filling of the cooling vessel with adsorbent before cooling the adsorbent in the cooling vessel and completely removing of the adsorbent from the cooling vessel after cooling the adsorbent. Every time the reservoir and the cooling vessel are opened for adding or removing adsorbent some vacuum, steam/purging gas and heat get lost. It is therefore preferred to open the reservoir and the cooling vessel as rarely as possible. By filling and draining the reservoir and preferably the cooling vessel completely, a maximum amount of adsorbent, i.e. a batch of adsorbent, is added to and removed from the reservoir and the cooling vessel with the result that the processes in the reservoir and preferably in the cooling vessel can be performed with low energy input for generating the vacuum, with low amount of steam or purging gas and with low losses of heat.

According to another embodiment of the method it is preferred to maintain the flow of gas stream and adsorbent through the adsorption device while at least two times the regeneration device is completely filled with the batch of adsorbent, the carbon dioxide is separated from the adsorbent and the batch of adsorbent is completely removed from the regeneration device. In this way the adsorption of carbon dioxide by the adsorbent can be performed continuously while the regeneration of the adsorbent is done batch-wise.

The invention is further explained below with reference to the drawings by way of preferred, non-limiting embodiments.
Fig. 1 shows a preferred embodiment of the plant in a state of cooling the adsorbent present in the cooling vessel;
Fig. 2 shows the plant of fig. 1 in a state in which the regeneration device has been filled with adsorbent;
Fig. 3 shows the plant of fig. 1 in a state of regenerating the adsorbent in the regeneration device and the cooling vessel has been emptied;
Fig. 4 shows the plant of fig. 1 in a state in which the regeneration device has been emptied; and
Fig. 5 shows a flow chart illustrating the method for capturing carbon dioxide from a carbon dioxide laden gas stream using the plant of fig. 1.

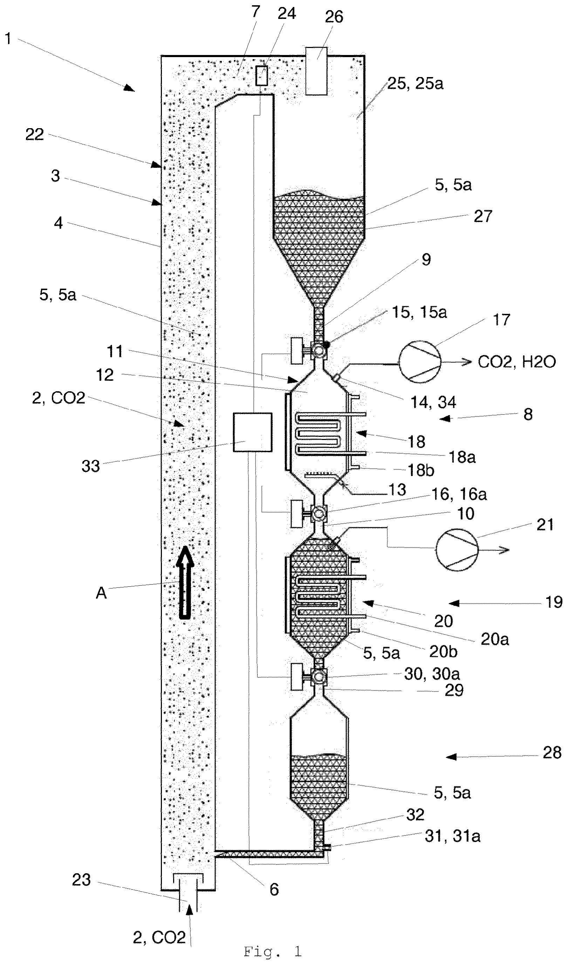

Fig. 1 shows an embodiment of a plant 1 for capturing carbon dioxide CO2 from a carbon dioxide laden gas stream 2. The plant 1 comprises an adsorption device 3 with a container 4 for containing an adsorbent 5 made of solid adsorbent particles 5a for binding the carbon dioxide CO2 to the adsorbent 5. In the example of fig. 1 some adsorbent 5 is already contained in the container 4. The adsorption device 3 comprises an adsorbent inlet 6 and an adsorbent outlet 7. The plant 1 comprises also a regeneration device 8 for separating the bound carbon dioxide CO2 from the adsorbent 5. The regeneration device 8 comprises an adsorbent intake 9 and an adsorbent outtake 10. As can be seen in fig. 1 the adsorbent outlet 7 of the adsorption device 3 is connected to the adsorbent intake 9 of the regeneration device 8 and the adsorbent outtake 10 of the regeneration device 8 is connected to the adsorbent inlet 6 of the adsorption device 3. By this loop regenerated adsorbent 5 can be reused in the adsorption device 3. The exemplary regeneration device 8 comprises a fixed bed regenerator 11 having a reservoir 12 for the adsorbent 5 and a fluid outlet 14 for withdrawing carbon dioxide CO2 from the reservoir 12. The fixed bed regenerator 11 can also comprise a steam inlet 13 for feeding steam or purging gas into the reservoir 12 and a steam outlet 34 for withdrawing any steam or purging gas from the reservoir 12 after separation of carbon dioxide CO2 from the adsorbent 5. The steam outlet 34 may be the fluid outlet 14 of the fixed bed regenerator 11.

In addition the plant 1 comprises an intake valve 15, in particular a intake ball valve 15a, arranged in the adsorbent intake 9 of the regeneration device 8 and an outtake valve 16, in particular a outtake ball valve 16a, arranged in the adsorbent outtake 10 of the regeneration device 8. The intake valve 15 and the outtake valve 16 are configured to be selectively transferred between an open state and a closed state. In the open state of intake valve 15 passage of the adsorbent 5 through the adsorbent intake 9 into the reservoir 12 of the fixed bed regenerator 11 is allowed. In the closed state of intake valve 15 passage of the adsorbent 5 through the adsorbent intake 9 into the reservoir 12 is blocked in an essentially airtight manner. In the open state of outtake valve 16 passage of the adsorbent 5 through the adsorbent outtake 10 out of the reservoir 12 is allowed. In the closed state of outtake valve 16 passage of the adsorbent 5 through the adsorbent outtake 10 out of the reservoir 12 is blocked in an essentially airtight manner. Furthermore the plant 1 comprises a vacuum generation unit 17 configured to generate a vacuum inside the reservoir 12 in the closed state of the intake valve 15 and of the outtake valve 16, respectively. Because of the vacuum generated by the vacuum generation unit 17 the adsorbent 5 in the reservoir 12 may be heated to lower temperatures for separating carbon dioxide CO2 from the adsorbent 5. For heating the adsorbent 5 in the reservoir 12 the regeneration device 8 may be connected to or comprise a heating unit 18, e.g. a heat exchanger 18a and/or a heat jacket 18b.

As illustrated in the example of fig. 1 a cooling vessel 19 adopted for cooling the adsorbent 5 can be connected to the adsorbent outtake 10 of the regeneration device 8. In particular the cooling vessel 19 can be arranged (i.e. connected) between the adsorbent outtake 10 of the regeneration device 8 and the adsorbent inlet 6 of the adsorption device 3. The cooling vessel 19 may be connected to a cooler 20 and/or to a vacuum generator 21. Although in fig. 1 the vacuum generator 21 is shown as a separate device, in another embodiment the vacuum generator 21 may be the vacuum generation unit 17. The cooler 20 may be a second heat exchanger 20a and/or a cooling jacket 20b. Preferably the cooling vessel 19 is arranged below the regeneration device 8, so that adsorbent 5 may fall by gravity out of the reservoir 12 into the cooling vessel 19.

According to the example shown in fig. 1 the adsorption device 3 may comprise a fluidized bed adsorber 22 with a gas stream inlet 23 for receiving the gas stream 2. Furthermore the adsorption device 3 may comprise or be connected to a flow device 24 configured to generate a flow of the gas stream 2 and adsorbent 5 through the fluidized bed adsorber 22, see the arrow A indicating the direction of flow. In addition the plant 1 may comprise a separator device 25, e.g. a cyclone 25a, for separating the adsorbent 5 from the gas stream 2. The separator device 25 is arranged between the adsorbent outlet 7 of the adsorption device 3 and the adsorbent intake 9 of the regeneration device 8. The separator device 25 preferably comprises a gas discharge device 26 for discharging gas essentially free of carbon dioxide CO2 e.g. into ambient air. Preferably the separator device 25 comprises a receptacle 27 to accommodate the solid adsorbent particles 5a received from the adsorption device 3 and to be transported into the reservoir 12 of the fixed bed regenerator 11. The plant 1 may further comprise a buffer vessel 28 for holding adsorbent 5 received from the cooling vessel 19. The buffer vessel 28 is therefore arranged between an adsorbent exit 29 of the cooling vessel 19 and the adsorbent inlet 6 of the adsorption device 3. To be able to transfer the adsorbent 5 selectively out of the cooling vessel 19 and in the embodiment of fig. 1 into the buffer vessel 28 an exit valve 30, preferably an exit ball valve 30a, may be arranged in the adsorbent exit 29 of the cooling vessel 19 and may be configured to be selectively transferred between an open state allowing passage of the adsorbent 5 through the adsorbent exit 29 out of the cooling vessel 19 and in the embodiment of fig. 1 into the buffer vessel 28 and a closed state blocking passage of the adsorbent 5 through the adsorbent exit 29. An inlet valve 31, in particular an L-valve 31a, may be arranged in the adsorbent inlet 6 of the adsorption device 3, in particular between an adsorbent outflow 32 of the buffer vessel 28 and the container 4. The inlet valve 31 may be configured for stepless adjusting a flow rate of adsorbent 5. Furthermore the plant 1 may comprise a control unit 33 which is connected to the intake valve 15 and to the outtake valve 16. The control unit 33 may be configured to transfer the intake valve 15 and the outtake valve 16 between an open state and a closed state. In particular the control unit 33 may keep the intake valve 15 in or transfer the intake valve 15 into the open state and keep the outtake valve 16 in or transfer the outtake valve 16 into the closed state until the reservoir 12 is completely filled with adsorbent 5 before separating the bound carbon dioxide CO2 from the adsorbent 5. In addition the control unit 33 may keep the intake valve 15 in or transfer the intake valve 15 into the closed state and keep the outtake valve 16 in or transfer the outtake valve 16 into the open state until the adsorbent 5 is completely removed from the reservoir 12 after separating the bound carbon dioxide CO2 from the adsorbent 5. The control unit 33 may also be connected to the inlet valve 31 and may be configured to control the flow rate of adsorbent 5 through the inlet valve 31 until a predefined amount of adsorbent 5 is present in the adsorption device 3. Furthermore the control unit 33 may be connected to the flow device 24 and may be configured to maintain the flow of gas stream 2 and adsorbent 5 through the container 4 of the adsorption device 3 for a time period during which at least twice the regeneration device 8 is completely filled with adsorbent 5 and the carbon dioxide CO2 is separated from the adsorbent 5 and the adsorbent 5 is completely removed from the regeneration device 8. The control unit 33 may also be connected to exit valve 30 and to other components of the plant 1, e.g. the heating unit 18, the steam inlet 13, the vacuum generation unit 17, the cooler 20, the vacuum generator 21 and/or to sensors, e.g. a level sensor detecting a level of adsorbent 5 in the reservoir 12 or in the adsorbent intake 9, a carbon dioxide sensor in the reservoir 12 or in the container 4, e.g. to detect a carbon dioxide CO2 concentration at the adsorbent outlet 7, or a sensor configured to detect a density or amount of adsorbent 5 in the container 4. These additional possible connections are not shown in Fig. 1 for the sake of clarity.

As shown in fig. 1 the separator device 25, the regeneration device 8, the cooling vessel 19 and the buffer vessel 28 are arranged preferably one above the other, seen in downwards direction. In this way the adsorbent 5 may flow by gravity into the respective next lower component. It is also preferred to construct the separator device 25, the regeneration device 8, the cooling vessel 19 and the buffer vessel 28 with tapering ends, like hoppers, to assist the outflow of adsorbent 5. In order to keep the size of the plant 1 small the adsorption device 3, in particular the container 4, is preferably arranged beside the arrangement of separator device 25, regeneration device 8, cooling vessel 19 and buffer vessel 28.

Fig. 1 shows the plant 1 in a condition of cooling the adsorbent 5 in the cooling vessel 19. In this condition the exit valve 30 is closed to keep the adsorbent 5 in the cooling vessel 19. The outtake valve 16 shall be closed as well in order to avoid transmission of heat from the reservoir 12 into the cooling vessel 19 and in particular if the adsorbent 5 shall be cooled by vacuum. The reservoir 12 is already empty and the intake vale 15 is closed to keep the reservoir 12 empty. Some adsorbent 5 loaded with carbon dioxide CO2 has accumulated in the separator device 25 and some cooled adsorbent 5 free from carbon dioxide CO2 is kept in the buffer vessel 28. The inlet valve 31 may be controlled to add adsorbent 5 into the container 4. For cooling the adsorbent 5 the temperature in the cooling vessel 19 may be between 30°C and 60°C at a pressure between 0 bar and atmospheric pressure (in particular when cooling by a heat exchanger 20a), more preferred the temperature in the cooling vessel 19 may be < 55°C at a pressure of < 0,2 bar, without applying steam, for example.

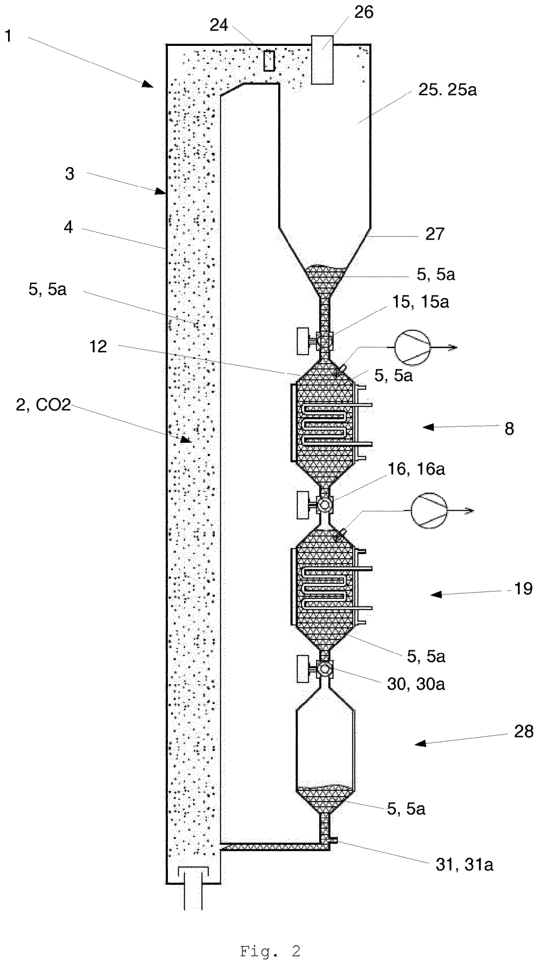

Fig. 2 shows the plant 1 of fig. 1 in a condition in which the regeneration device 8 has been filled completely with a batch of adsorbent 5 taken from the separator device 25. The cooling vessel 19 is still closed as in the condition shown in fig. 1 for cooling some adsorbent 5. The intake valve 15 is closed in order to allow for generation of vacuum in the reservoir 12. The outtake valve 16 and the exit valve 30 are closed as well. The inlet valve 31 may be controlled to add adsorbent 5 into the container 4, thereby continuously (or step-wise) emptying the buffer vessel 28. Some adsorbent 5 loaded with carbon dioxide CO2 is being added to the separator device 25 due to the ongoing adsorption of carbon dioxide CO2.

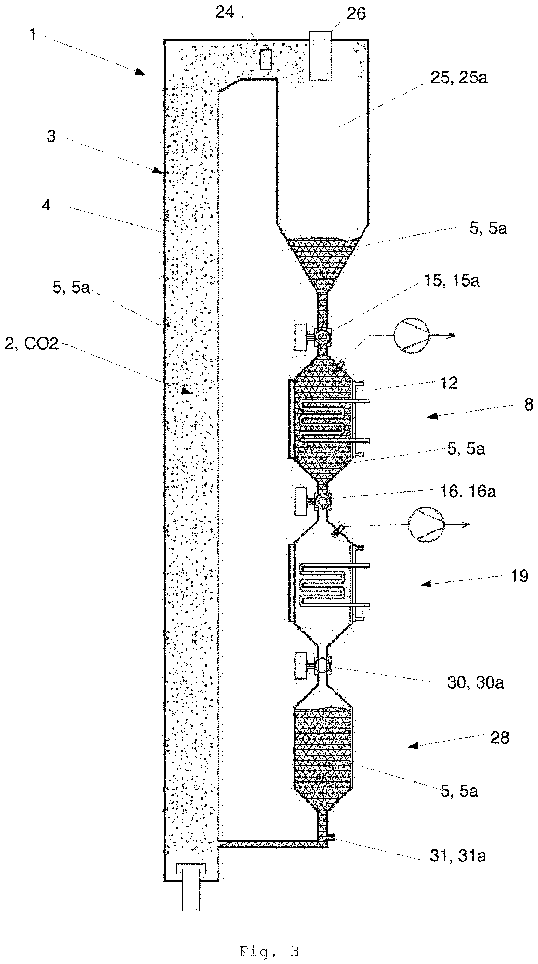

Fig. 3 shows the plant 1 of fig. 1 in a condition of regenerating the adsorbent 5 in the regeneration device 8 and the adsorbent 5 which was accommodated in the cooling vessel 19 in fig. 2 has been transferred to the buffer vessel 28. Therefore the cooling vessel 19 is empty. Some adsorbent 5 loaded with carbon dioxide CO2 is being added to the separator device 25 due to the ongoing adsorption of carbon dioxide CO2. The intake valve 15 and the outtake valve 16 are closed. Preferably also the exit valve 30 is closed. For separating the carbon dioxide CO2 from the adsorbent 5 the temperature in the reservoir 12 is preferably between 60°C and 120°C, more preferred between 60°C and 90°C, and the pressure in the reservoir 12 is preferably between 0,2 bar and atmospheric pressure, more preferred between 0,2 and 0,5 bar.

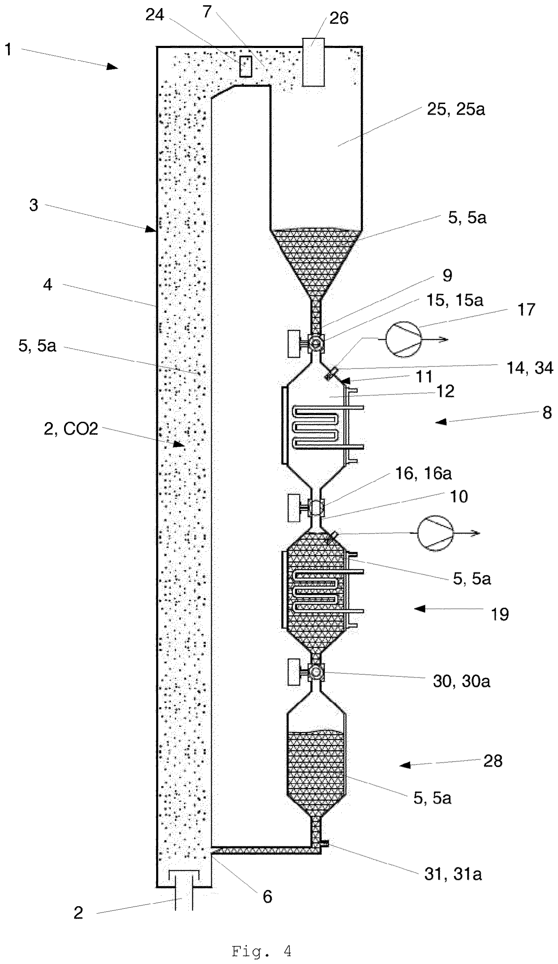

Fig. 4 shows the plant 1 of fig. 1 in a condition in which the batch of adsorbent 5 essentially free of carbon dioxide CO2 has been transferred from the regeneration device 8, which is therefore empty in this condition, into the cooling vessel 19 for being cooled. Some adsorbent 5 loaded with carbon dioxide CO2 is being added to the separator device 25 due to the ongoing adsorption of carbon dioxide CO2. The intake valve 15 and the exit valve 30 are closed. The outtake valve 16 shall be closed as well in order to avoid transmission of heat from the reservoir 12 into the cooling vessel 19 and in particular if the adsorbent 5 shall be cooled by vacuum.

In the conditions shown in figs. 1 to 4 the temperature in the container 4 may be between -10°C and 40°C, the gas stream 2 at the gas stream inlet 23 may comprise between 50 and 3000 ppm carbon dioxide CO2, the relative humidity of the gas stream 2 at the gas stream inlet 23 may be between 0 and 100% and more preferred the temperature in the container 4 may be between 10°C and 40°C, the gas stream 2 at the gas stream inlet 23 may comprise between 300 and 1500 ppm carbon dioxide CO2 and the relative humidity of the gas stream 2 at the gas stream inlet 23 may be between 30 and 80%.

For the sake of clarity the control unit 33 is not shown in figs. 2 to 4.

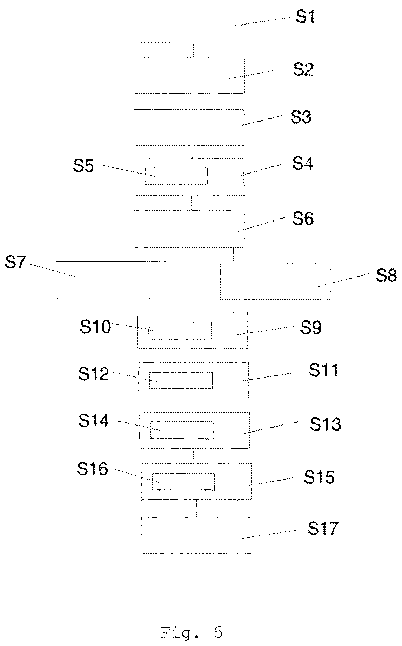

Fig. 5 shows an exemplary and simplified flow chart illustrating a method for capturing carbon dioxide CO2 from a carbon dioxide laden gas stream 2 using the plant 1 of fig. 1. It shall be noted that the flow chart does not illustrate every possible step but only main steps for performing the method.

In a step S1 a carbon dioxide CO2 laden gas stream 2 is introduced, preferably continuously, into the container 4 of the adsorption device 3, which container 4 contains a part of the adsorbent 5 made of solid adsorbent particles 5a, which are configured for binding the carbon dioxide CO2 to the adsorbent 5. Preferably the adsorption device 3 comprises a fluidized bed adsorber 22.

In a step S2 the adsorbent 5 and the gas stream 2 are transported through the container 4 (in the direction indicated by arrow A, i.e. upwards), preferably by generating a flow of gas stream 2 and adsorbent 5 through the adsorption device 3 by means of a flow device 24, as a result of which carbon dioxide CO2 from the gas stream 2 is adsorbed on the adsorbent 5.

The steps S1 and S2 can be performed simultaneously so that a gas stream 2 is introduced into the container 4 e.g. continuously, while carbon dioxide CO2 of the gas volume introduced earlier is being adsorbed in the container 4.

In a step S3 the adsorbent 5 exiting the container 4 is separated from the gas stream 2, which at the adsorbent outlet 7 is essentially free of carbon dioxide CO2, by means of a separator device 25 arranged between the adsorption device 3 and the regeneration device 8 before transporting the adsorbent 5 into the regeneration device 8 in step S4.

In a step S4 the adsorbent 5 is transmitted onwards into the regeneration device 8 by feeding a batch of the adsorbent 5 into the reservoir 12 of the fixed bed regenerator 11 of the regeneration device 8. Preferably in a substep S5 the reservoir 12 of the regeneration device 8 is being completely filled with the batch of adsorbent 5 before separating the carbon dioxide CO2 from the adsorbent 5.

In a step S6 the reservoir 12 of the fixed bed regenerator 11 containing the adsorbent 5 is being closed in an essentially airtight manner.

In a step S7 a vacuum is generated inside the reservoir 12 of the fixed bed regenerator 11 and heat is provided into the reservoir 12 thereby separating the carbon dioxide CO2 bound to the adsorbent 5 from the adsorbent 5. Heating the interior of the reservoir 12 may be performed essentially continuously but is performed at least when adsorbent 5 is present in the reservoir 12.

In a step S8, which can be performed simultaneously to step 7, steam or purging gas is provided into the reservoir 12 while adsorbent 5 is present in the reservoir 12. The steam may be hot steam. The purging gas may be hot purging gas.

In a step S9 the carbon dioxide CO2 separated from the adsorbent 5 and the adsorbent 5 are removed from the fixed bed regenerator 11, preferably in a substep S10 by completely removing the batch of the adsorbent 5 from the reservoir 12 of the regeneration device 8 after separating the carbon dioxide CO2 from the adsorbent 5.

In a step S11 the adsorbent 5 is being transported from the regeneration device 8, in particular from the fixed bed regenerator 11, into the cooling vessel 19 before recirculating the adsorbent 5 into the adsorption device 3 in step S15 and the adsorbent 5 in the cooling vessel 19 is being cooled by cooling the cooling vessel 19 with a cooling unit 20 and/or a vacuum generator 21. Preferably the cooling vessel 19 is being completely filled with adsorbent 5 in a substep S12 before cooling the adsorbent 5 in the cooling vessel 19.

In a step S13 the cooled adsorbent 5 is being transported from the cooling vessel 19 into a buffer vessel 28 and at least a part of the adsorbent 5 is being held in the buffer vessel 28 before recirculating the adsorbent 5 into the adsorption device 3 in step S15. Preferably the adsorbent 5 is being completely removed from the cooling vessel 19 in a substep S14 after cooling the adsorbent 5.

In a step S15 the adsorbent 5 is being recirculated into the adsorption device 3, preferably in a substep S16 by comparing the amount of adsorbent 5 contained in the adsorption device 3, in particular in the container 4, with a target value of adsorbent 5 and transporting adsorbent 5 from the buffer vessel 28 into the adsorption device 3, in particular into the container 4, to meet the target value.

In a step S17 the flow of gas stream 2 and adsorbent 5 through the adsorption device 3 is maintained while at least two times the regeneration device 8 is completely filled with the batch of adsorbent 5, the carbon dioxide CO2 is separated from the adsorbent 5 and the batch of adsorbent 5 is completely removed from the regeneration device 8.

The steps S1 to S17 shall not be understood as a sequence necessary to perform the method, i.e. they do not need to be performed one after the other. In particular some of the steps S1 to S17 may be performed simultaneously.

## Claims

1. A plant (1) for capturing carbon dioxide (CO2) from a carbon dioxide laden gas stream (2), comprising:
an adsorption device (3) with a container (4) for containing an adsorbent (5) made of solid adsorbent particles (5a) for binding the carbon dioxide (CO2) to the adsorbent (5), the adsorption device (3) having an adsorbent inlet (6) and an adsorbent outlet (7),
a regeneration device (8) for separating the bound carbon dioxide (CO2) from the adsorbent (5), the regeneration device (8) having an adsorbent intake (9) and an adsorbent outtake (10),
wherein the adsorbent outlet (7) of the adsorption device (3) is connected to the adsorbent intake (9) of the regeneration device (8) and the adsorbent outtake (10) of the regeneration device (8) is connected to the adsorbent inlet (6) of the adsorption device (8),
**characterized by**
a fixed bed regenerator (11) of the regeneration device (8) having a reservoir (12) for the adsorbent (5) and a fluid outlet (14) for withdrawing at least carbon dioxide (CO2) from the reservoir (12),
an intake valve (15) being arranged in the adsorbent intake (9) of the regeneration device (8),
an outtake valve (16) being arranged in the adsorbent outtake (10) of the regeneration device (8),
wherein the intake and the outtake valve (15, 16) are configured to be selectively transferred between an open state allowing passage of the adsorbent (5) through the adsorbent intake (9) into the reservoir (12) of the fixed bed regenerator (11) and through the adsorbent outtake (10) out of the reservoir (12), respectively, and a closed state blocking passage of the adsorbent (5) through the adsorbent intake (9) into the reservoir (12) and through the adsorbent outtake (10) out of the reservoir (12) in an essentially airtight manner, respectively,
a vacuum generation unit (17) configured to generate a vacuum inside the reservoir (12) in the closed state of the intake and outtake valve (15, 16), respectively.

2. Plant (1) according to claim 1, **characterized in that** the intake valve (15) is an intake ball valve (15a) and/or the outtake valve (16) is an outtake ball valve (16a), wherein preferably the fixed bed regenerator (11) comprises a steam inlet (13) for feeding steam or purging gas into the reservoir (12), wherein preferably the regeneration device (8) is connected to a heating unit (18).

3. Plant (1) according to claim 1 or 2, **characterized in that** a cooling vessel (19) for cooling the adsorbent (5) is arranged between the adsorbent outtake (10) of the regeneration device (8) and the adsorbent inlet (6) of the adsorption device (3), the cooling vessel (19) being connected to a cooler (20) and/or a vacuum generator (21).

4. Plant (1) according to any one of claims 1 to 3, **characterized in that** the adsorption device (3) comprises a fluidized bed adsorber (22) with a gas stream inlet (23) for receiving the gas stream (2), wherein the adsorption device (3) preferably comprises or is connected to a flow device (24) configured to generate a flow of the gas stream (2) and adsorbent (5) through the fluidized bed adsorber (22), wherein preferably the adsorbent (5) is contained in the container (4) and the solid adsorbent particles (5a) being smaller than 1,5 mm in size.

5. Plant (1) according to any one of claims 1 to 4, **characterized in that** an inlet valve (31), in particular an L-valve (31a), configured for stepless adjusting a flow rate of adsorbent (5) is arranged in the adsorbent inlet (6) of the adsorption device (3).

6. Plant (1) according to any one of claims 1 to 5, **characterized in that** a separator device (25) for separating the adsorbent (5) from the gas stream (2) is arranged between the adsorbent outlet (7) of the adsorption device (3) and the adsorbent intake (9) of the regeneration device (8).

7. Plant (1) according to any one of claims 3 to 6, **characterized by**
an exit valve (30), preferably an exit ball valve (30a), being arranged in an adsorbent exit (29) of the cooling vessel (19) and configured to be selectively transferred between an open state allowing passage of the adsorbent (5) through the adsorbent exit (29) out of the cooling vessel (19) and a closed state blocking passage of the adsorbent (5) through the adsorbent exit (29), preferably further comprising a buffer vessel (28) for holding adsorbent (5) is arranged between the adsorbent exit (29) of the cooling vessel (19) and the adsorbent inlet (6) of the adsorption device (3).

8. Plant (1) according to any one of claims 1 to 7, **characterized by**
a control unit (33) being connected to the intake valve (15) and to the outtake valve (16) and configured to transfer the intake valve (15) into the open state and to transfer the outtake valve (16) into the closed state until the reservoir (12) is completely filled with adsorbent (5) before separating the bound carbon dioxide (CO2) from the adsorbent (5) and configured for transferring the intake valve (15) into the closed state and the outtake valve (16) into the open state until the adsorbent (5) is completely removed from the reservoir (12) after separating the bound carbon dioxide (CO2) from the adsorbent (5), wherein preferably the control unit (33) is connected to the inlet valve (31) and configured to control the flow rate of adsorbent (5) through the inlet valve (31) until a predefined amount of adsorbent (5) is present in the adsorption device (3).

9. Plant (1) according to any one of claims 4 to 8, **characterized in that** the control unit (33) is connected to the flow device (24) and configured to maintain the flow of gas stream (2) and adsorbent (5) through the container (4) of the adsorption device (3) for a time period during which at least twice the regeneration device (8) is completely filled with adsorbent (5), the carbon dioxide (CO2) is separated from the adsorbent (5) and the adsorbent (5) is completely removed from the regeneration device (8).

10. Method for capturing carbon dioxide (CO2) from a carbon dioxide laden gas stream (2), comprising at least the following steps:
a) introducing the carbon dioxide laden gas stream (2) into a container (4) of an adsorption device (3) containing an adsorbent (5) made of solid adsorbent particles (5a) for binding the carbon dioxide (CO2) to the adsorbent (5);
b) transporting the adsorbent (5) through the container (4), thereby adsorbing carbon dioxide (CO2) from the gas stream (2) on the adsorbent (5) contained in the adsorption device (3), and further into a regeneration device (8);
**characterized by**
c) feeding a batch of the adsorbent (5) into a reservoir (12) of a fixed bed regenerator (11) of the regeneration device (8) ;
d) closing the reservoir (12) of the fixed bed regenerator (11) containing the adsorbent (5) in an essentially airtight manner;
e) generating a vacuum inside the reservoir (12) of the fixed bed regenerator (11) and providing heat into the reservoir (12) thereby separating the carbon dioxide (CO2) bound to the adsorbent (5) from the adsorbent (5);
f) removing the carbon dioxide (CO2) separated from the adsorbent (5) and the adsorbent (5) from the fixed bed regenerator (11); and
g) recirculating the adsorbent (5) into the adsorption device (3).

11. Method according to claim 10, **characterized by**
providing steam or purging gas into the reservoir (12) during step e) and preferably heating the reservoir (12) during step e) with a heating unit (18).

12. Method according to claim 10 or 11, **characterized by**
transporting the adsorbent (5) from the regeneration device (8) into a cooling vessel (19) before step g) and cooling the cooling vessel (19) with a cooling unit (20) and/or a vacuum generator (21).

13. Method according to any one of claims 10 to 12, **characterized by**
providing the adsorption device (3) comprising a fluidized bed adsorber (22) in step a) and transporting the adsorbent (5) through the container (4) in step b) by generating a flow of gas stream (2) and adsorbent (5) through the adsorption device (3) by means of a flow device (24) and preferably separating the adsorbent (5) from the gas stream (2) by means of a separator device (25) arranged between the adsorption device (3) and the regeneration device (8) before transporting the adsorbent (5) into the regeneration device (8) in step b).

14. Method according to claim 12 or 13, **characterized by**
transporting the adsorbent (5) from the cooling vessel (19) into a buffer vessel (28) and holding at least a part of the adsorbent (5) in the buffer vessel (28) before step g), and
preferably comparing the amount of adsorbent (5) contained in the adsorption device (3) with a target value of adsorbent (5) and transporting adsorbent (5) from the buffer vessel (28) into the adsorption device (3) to meet the target value.

15. Method according to any one of claims 12 to 14, **characterized by**
completely filling the reservoir (12) of the regeneration device (8) with the batch of adsorbent (5) before separating the carbon dioxide (CO2) from the adsorbent (5) and completely removing the batch of the adsorbent (5) from the reservoir (12) of the regeneration device (8) after separating the carbon dioxide (CO2) from the adsorbent (5), and preferably completely filling of the cooling vessel (19) with adsorbent (5) before cooling the adsorbent (5) in the cooling vessel (19) and completely removing of the adsorbent (5) from the cooling vessel (19) after cooling the adsorbent (5), and preferably maintaining the flow of gas stream (2) and adsorbent (5) through the adsorption device (3) while at least two times the regeneration device (8) is completely filled with the batch of adsorbent (5), the carbon dioxide (CO2) is separated from the adsorbent (5) and the batch of adsorbent (5) is completely removed from the regeneration device (8) .
